# EUROPEAN PATENT SPECIFICATION

(11) **EP 1 516 541 B1**
(45) Date of publication and mention of the grant of the patent: **20.08.2008**
(21) Application number: 03021368.0
(22) Date of filing: 22.09.2003
(51) Int. Cl.: A23L 1/00

(54) **Method for manufacturing a granular type food preparation by agglomeration**
Verfahren zur Herstellung von körnigen Nahrungsmitteln durch Agglomeration
Méthode de préparation de granulés de produit alimentaire par agglomération

(43) Date of publication of application: 23.03.2005
(73) Proprietor: Nestec S.A., 1800 Vevey (CH)
(72) Inventor: Palzer, Stefan, CH-8320 Fehraltorf (CH); Waessle, Ingo, CH-8400 Winterthur (CH)
(74) Representative: Ravenel, Thierry Gérard Louis

(56) References cited:
- US-A- 3 135 612
- US-A- 3 518 095
- US-A- 4 777 056
- US-A- 6 056 949

## Description

### FIELD OF THE INVENTION

The present invention concerns a method for manufacturing granular type food preparations by agglomeration of food powder particles. More particularly the invention concerns such a method for manufacturing food preparations which can be performed in a mixer without post drying steps and without using fat like substances as binding agent for the food powder particles. The method of the invention is particularly suitable for food preparations incorporating thermo volatile aromas such as tomato-, garlic-, asparagus- or lemon-aromas.

### BACKGROUND OF THE INVENTION

For practical reasons, such as handling, conditioning, or conservation time on the shelves in the shops, numerous food products are proposed in the form of dry products such as powders, or granules which can be mixed with a liquid, for example water or milk, when used.

Powdery products often contain dusts that are responsible for negative visual and physical aspects of the product. It is therefore preferred to present food preparations in the form of granules obtained from agglomeration of powder particles.

The conventional methods for producing such granules consist in agglomerating the food powder particles with the addition of steam or liquid water based binder solutions sprayed into a mechanical or pneumatically fluidised bed of powder particles. The added water is subsequently or simultaneously eliminated by evaporation in a drying step. However agglomeration is also possible during drying of solutions (or pastes) or by applying pressure on a particle bulk. One disadvantage of these conventional fluidised bed agglomeration methods is that the drying steps are often long and require therefore large quantities of energy increasing thereby the production costs of the final product. Another disadvantage is that these methods require relatively complex and expensive installations. Yet another disadvantage is that the temperatures used for drying in these methods, typically 80 °C-110 °C , evaporate the thermo volatile aromas contained in the granules thereby having a detrimental effect on the gustative quality of the final product. Furthermore using drying air increases the risk of oxidation of sensitive ingredients. Another method for producing such granules consists in agglomerating the food powder particles with the aid of melted fat like substances as binding agent, said substances being sprayed onto a fluidised bed of the powder or into a rotating drum containing the powder particles to achieve a mix that is subsequently brought to room temperature by cooling.

This method has also several drawbacks. Indeed, the fat like substances are not well accepted with respect to the nutritional quality of the final product since the fats used are generally rich in saturated and trans-fatty acids and poor in unsaturated fatty acids. Moreover the physical properties of products agglomerated using fat as binder are sometimes highly temperature dependent. Thus such products are less suitable for hot climates.

US-A-3 135 612 describes a process for agglomerating culinary mixes in which the mix particles are contacted with a finely atomised spray of concentrated aqueous sugar solution.

US-A-3 518 095 describes a method in which pulverised sugar is sprayed with an aqueous solution of a carbohydrate.

### SUMMARY OF THE INVENTION

It is thus a main object of the invention to overcome the drawbacks of the aforementioned prior art by providing a method for manufacturing granular type food preparations by agglomeration of food powder particles which is cost effective and simple to implement.

Another object of the invention is to provide such a method that can be performed without using fat like substances as binding agent for the powder particles.

Another object of the invention is to provide such a method that preserves the thermo volatile aromas contained in the granular product.

Another object of the invention is to provide such a method that allows the drying steps during or after the spraying to be eliminated.

Another object of the invention is to provide such a method that can be implemented in a conventional powder mixing equipment slightly and easily modified.

The invention therefore concerns a method for manufacturing a food preparation of the granular type by agglomeration of food powder particles comprising the steps of :
- preparing an aqueous super-saturated solution of polysaccharides having a DE comprised between 0 and 40, preferably between 5 and 30 and most preferably between 10 and 25 and at least one component selected in the group consisting of mono-, di-, or tri-saccharides;
- fluidising the food powder particles;
- spraying said super-saturated aqueous solution onto fluidised powder particles for agglomerating said food powder particles into granules, said solution being at a temperature allowing it to remain in an injectable state;
- collecting the formed granules.

Thanks to the present invention the water quantity added to the food powder via the super-saturated solution is kept as low as possible so that the subsequent drying step is eliminated. As the method according to the invention does not require any drying steps it is more economical than the methods of the prior art, in particular those agglomeration methods using standard fluidising bed which include high energy consuming steps. Moreover, the method can be advantageously implemented in a conventional powder mixing equipment wherein just a nozzle or atomizer need to be added for spraying the super-saturated solution onto the fluidised powder particles contained in the mixing equipment. Preferably a double phase nozzle or atomizer will be used.

In the present description, DE is to be understood as the measure of the hydrolysis degree of starch and its derivatives, expressed by the determination of the reduction power given in dextrose equivalent (DE). The value 100 corresponds to a pure glucose solution. For example the maltodextrines have DE values comprised between 2 and 25, and the glucose industrial syrups have DE values comprised between 30 and 60.

The polysaccharides with the above mentioned DE values are selected in the group consisting of starch, maltodextrine and glucose syrup used alone or in combination.

Further, as no drying steps is required in the method of the invention, the loss of volatile aromas contained in the granules can be significantly reduced.

The, at room temperature, super-saturated solution includes 5 to 35 % water, 5 at least % polysaccharides with the above mentioned DE values and 40 to 80% of at least one component selected in the group consisting of mono-, di-, tri- saccharides i.e. preferably a mixture of maltodetxrine with mono- and/or di and trisaccharides such as saccharose, trehalose, fructose, glucose, maltose, galactose and maltotriose used alone or in combination. Preferably the super-saturated solution includes 15 to 27 % water, 15 to 30 % polysaccharides with the above mentioned DE values and 55 to 65 % of at least one component selected in the group consisting of mono-, di-, or tri-saccharides . Even more preferably the super-saturated solution includes 20 % water, 20 % polysaccharides and 60 % of least one component selected in the group consisting of mono-, di-, or tri-saccharides.

Below the process for manufacturing a food preparation of the granular type by agglomeration of food powder particles according to the invention is explained more in detail.

The general idea of the invention consists in spraying a, compared to room temperature, super-saturated solution of the syrup at temperature and pressure conditions in which the syrup remains in an injectable or sprayable state into or onto a bed of fluidised particles to agglomerate said particles to form granules. The super-saturated syrup acts thus as a kind of glue which, due to its super-saturated character, solidifies rapidly while cooling down after having been injected or sprayed resulting in the formation of granules without any subsequent steps of drying.

The powder to be granulated or agglomerated may be any kind of food powder such as culinary powders (e.g. bouillon powder), milk powder, infant formulas, dessert powders etc. Typically the food powder particles have an average particle size of about of 50-1000 microns and wherein the average particle size of the granules obtained ranges between 200 to 3 000 microns. The method of the invention is particularly suitable for food powders including aromas, in particular thermo volatile aromas which deteriorates during high temperature drying steps.

The, at room temperature, super-saturated solution is prepared by mixing the various compounds while being stirred and heated at a temperature typically comprised between 70 °C and 95 °C. Once a homogeneous super-saturated solution is reached, the solution is kept at 70 °C - 90 °C to maintain the desired viscosity and to enable spraying. A this stage, the super-saturated solution has the form of a liquid syrup. For example, the viscosity of a syrup whose composition is about 20 % water, about 20 % maltodextrine of DE 21 and about 60 % saccharose exhibits a constant viscosity of about 125 mPa·s at a shear-rate of about 1 to 500 s⁻¹ and at a temperature of about 90 °C. Such low viscosity allows to easily spray such a syrupy solution while allowing said solution to be highly viscous or even solid at room temperature.

It is understood that the temperature at which the super-saturated solution will be sprayed is dependent on the concentration of the syrup and that the higher the concentration the higher the temperature (preparation and injection) must be. In the case in which the super-saturated solution is exposed to pressure it can be heated to a higher temperature.

The super-saturated solution is applied to the fluidised food powder particles to be agglomerated. The powder can be fluidised conventionally i.e. mechanically or pneumatically in any kind of powder mixers or fluidised beds. The super-saturated syrup is applied from above onto the fluidised bed by a spraying device typically a nozzle or atomiser which allows the super-saturated solution to be sprayed into droplets onto the fluidised powder particles. The super-saturated solution is of course heated prior to spraying so as to be brought in a state sufficiently liquid to be sprayed. Typically the super-saturated solution is heated to a temperature comprised between 70 °C and 95 °C and kept at such temperatures upon spraying.

Preferably, and to avoid chilling and premature re-crystallization of the super-saturated solution during spraying or before the droplets of super-saturated solution reach the powder particles, heated air is simultaneously injected in the spraying region, i. e. together with the heated syrup. Advantageously the simultaneous injection may be achieved through a double phase nozzle or atomizer. The temperature of the air injected is typically comprised between 100 °C and 150 °C when the spraying temperature of the super-saturated solution is comprised between 70 °C and 95 °C. The hot air also acts advantageously as driving and droplet forming medium for the super-saturated solution. Thus, the droplets can be propelled onto the fluidised bed of particles with additional kinetic energy to reach most of the powder particles and improve the agglomeration process.

Alternatively, the super-saturated solution can be applied from below into of the fluidised powder bed.

Typically, the quantity of super-saturated solution fed into the fluidised bed with respect to the quantity of powder particles is adjusted to obtain a granular product wherein the super-saturated syrup represents from about 1 to 12 % and preferably 2 to 10 % of the total powder granule weight.

Thanks to their composition, the super-saturated solution droplets which have agglomerated the powder particles, rapidly solidifies and thereby forms rigid granules. These granules can then be directly filled into bags or drums without any drying or cooling steps.

It goes without saying that the invention is not limited to that has just been described and that simple modifications and variants of the method can be envisaged without departing from the scope of the present invention defined in the appended claims.

## Claims

1. Method for manufacturing a food preparation of the granular type by agglomeration of food powder particles comprising the steps of:
- preparing a super-saturated aqueous solution of polysaccharides having a DE value comprised between 0 and 40 at room temperature and at least one component selected in the group consisting of mono-, di-, or tri- saccharides, said polysaccarides being selected from the group consisting of starch, maltodextrine and glucose syrup used alone or in combination wherein said super-saturated solution includes 5 to 35 % water, at least 5 % polysaccharides and 40 to 80 % of at least one component selected in the group consisting of mono-, di-, tri-, saccharides;
- fluidising the food powder particles;
- spraying said super-saturated solution onto fluidised powder particles for agglomerating said food powder particles into granules, said solution being at a temperature allowing it to remain in an injectable state;
- collecting the formed granules.

2. Method according to claim 1, wherein said super-saturated solution includes 15 to 27 % water, 15 to 30 % polysaccharides and 55 to 65 % of at least one component selected in the group consisting of mono-, di-, or tri-saccharides.

3. Method according to any of claims 1 to 3, wherein said super-saturated solution includes 20 % water, 20 % polysaccharides and 60 % of at least one component selected in the group consisting of mono-, di-, or tri-saccharides.

4. Method according to any of claims 1 to 3 wherein said at least one component selected in the group comprising mono-, di-, or tri-saccharides is selected in the group comprising saccharose, trehalose, fructose, glucose, maltose, galactose and maltotriose used alone or in combination.

5. Method according to any of claims 1 to 4 wherein said super-saturated solution is sprayed at a temperature comprised between 70°C and 95°C.

6. Method according to any of claims 1 to 5, further including a hot air injection step simultaneous to the super-saturated solution spraying step to avoid cooling down of the solution before spraying.

7. Method according to claim 6 wherein said hot air is injected at a temperature comprised between 100 ° C and 150 °C.

8. Method according to claim 5 or 6, wherein said super-saturated solution and said hot air are injected by means of a double phase nozzle or atomiser.

9. Method according to any of the preceding claims wherein said super-saturated solution represents 1 to 12% and preferably 2 to 10% of the total powder granule weight.

10. Method according to any of the preceding claims wherein said food powder particles include aromas, in particular thermo volatile aromas.

11. Method according to any of the proceeding claims wherein said food powder particles have an average particle size of about of 50-1000 microns and wherein the average particle size of the granules obtained ranges between 200 to 3000 microns.

12. Method according to any of the preceding claims wherein the powder is fluidised mechanically or pneumatically.

## Patentansprüche

1. Verfahren zum Herstellen einer Nahrungsmittelzubereitung des körnigen Typs durch Agglomeration von Nahrungsmittelpulver-Partikeln, das die folgenden Schritte umfasst:
- Zubereiten einer hochgesättigten wässrigen Lösung aus Polysacchariden mit einem DE-Wert im Bereich von 0 bis 40 bei Raumtemperatur und aus wenigstens einer Komponente, die aus der Gruppe ausgewählt ist, die aus Mono-, Di- oder Trisacchariden besteht, wobei die Polysaccharide aus der Gruppe ausgewählt sind, die aus Stärke, Maltodextrin und Glukosesirup besteht, die allein oder in Kombination verwendet werden, wobei die hochgesättigte Lösung 5 bis 35 % Wasser, wenigstens 5 % Polysaccharide und 40 bis 80 % wenigstens einer Komponente, die aus der Gruppe gewählt ist, die aus Mono-, Di-und Trisacchariden besteht, enthält;
- Fluidisieren der Nahrungsmittelpulver-Partikel;
- Sprühen der hochgesättigten Lösung auf die fluidisierten Pulverpartikel, um die Nahrungsmittelpulver-Partikel zu Körnern zu agglomerieren, wobei die Lösung eine Temperatur hat, die ermöglicht, dass sie in einem einspritzbaren Zustand bleibt;
- Sammeln der gebildeten Körner.

2. Verfahren nach Anspruch 1, wobei die hochgesättigte Lösung 15 bis 27 % Wasser, 15 bis 30 % Polysaccharide und 55 bis 65 % wenigstens einer Komponente, die aus der Gruppe ausgewählt ist, die aus Mono-, Di- oder Trisacchariden besteht, enthält.

3. Verfahren nach einem der Ansprüche 1 bis 3, wobei die hochgesättigte Lösung 20 % Wasser, 20 % Polysaccharide und 60 % wenigstens einer Komponente, die aus der Gruppe ausgewählt ist, die aus Mono-, Di- oder Trisacchariden besteht, enthält.

4. Verfahren nach einem der Ansprüche 1 bis 3, wobei die wenigstens eine Komponente, die aus der Gruppe ausgewählt ist, die Mono-, Di- oder Trisaccharide enthält, aus der Gruppe ausgewählt ist, die Saccharose, Trehalose, Fructose, Glukose, Maltose, Galaktose und Maltotriose, die allein oder in Kombination verwendet werden, enthält.

5. Verfahren nach einem der Ansprüche 1 bis 4, wobei die hochgesättigte Lösung bei einer Temperatur im Bereich von 70 °C bis 95 °C gesprüht wird.

6. Verfahren nach einem der Ansprüche 1 bis 5, das ferner einen Heißluft-Einleitungsschritt gleichzeitig zu dem Schritt des Sprühens der hochgesättigten Lösung umfasst, um ein Abkühlen der Lösung vor dem Sprühen zu vermeiden.

7. Verfahren nach Anspruch 6, wobei die heiße Luft bei einer Temperatur im Bereich von 100 °C bis 150 °C eingeleitet wird.

8. Verfahren nach Anspruch 5 oder 6, wobei die hochgesättigte Lösung und die heiße Luft mittels einer Doppelphasendüse oder eines Zerstäubers eingeleitet werden.

9. Verfahren nach einem der vorhergehenden Ansprüche, wobei die hochgesättigte Lösung 1 bis 12 % und vorzugsweise 2 bis 10 % des gesamten Pulverkorngewichts repräsentiert.

10. Verfahren nach einem der vorhergehenden Ansprüche, wobei die Nahrungsmittelpulver-Partikel Aromen, insbesondere wärmeflüchtige Aromen enthalten.

11. Verfahren nach einem der vorhergehenden Ansprüche, wobei die Nahrungsmittelpulver-Partikel eine durchschnittliche Partikelgröße von etwa 50-1000 Mikrometer haben und wobei die durchschnittliche Partikelgröße der erhaltenen Körner im Bereich von 200 bis 3000 Mikrometer liegt.

12. Verfahren nach einem der vorhergehenden Ansprüche, wobei das Pulver mechanisch oder pneumatisch fluidisiert wird.

## Revendications

1. Procédé pour la fabrication d'une préparation alimentaire du type granulaire par agglomération de particules de poudre alimentaire comprenant les étapes de:
- préparer une solution aqueuse sursaturée de polysaccharides ayant une valeur de DE comprise entre 0 et 40 à température ambiante et au moins un composé sélectionné dans le groupe comprenant des mono-, di-, ou tri- saccharides, lesdits polysaccharides étant sélectionnés dans le groupe comprenant l'amidon, la maltodextrine et le sirop de glucose, utilisés seuls ou en combinaison dans lequel la solution sursaturée comprend 5 à 35% d'eau, au moins 5% de polysaccharides et 40 à 80% d'au moins un composé sélectionné dans le groupe comprenant les mono-, di-, ou tri-saccharides ;
- fluidiser les particules de poudre alimentaire ;
- pulvériser ladite solution sursaturée sur les particules de poudre fluidisées pour agglomérer lesdites particules de poudre alimentaire en granulés, ladite solution étant à une température lui permettant de rester dans un état injectable ;
- recueillir les granulés formés.

2. Procédé selon la revendication 1 dans lequel la solution sursaturée comprend 15 à 27% d'eau, 15 à 30% de polysaccharides et 55 à 65% d'au moins un composé sélectionné dans le groupe comprenant des mono-, di-, ou tri- saccharides.

3. Procédé selon l'une quelconque des revendications 1 à 3 dans lequel ladite solution sursaturée comprend 20% d'eau, 20% de polysaccharides et 60% d'au moins un composé sélectionné dans le groupe comprenant des mono-, di-, ou tri- saccharides.

4. Procédé selon l'une quelconque des revendications 1 à 3 dans lequel ledit au moins un composé sélectionné dans le groupe comprenant des mono-, di-, ou tri- saccharides est sélectionné dans le groupe comprenant le saccharose, le tréhalose, le fructose, le glucose, le maltose, le galactose et le maltotriose utilisés seuls ou en combinaison.

5. Procédé selon l'une quelconque des revendications 1 à 4 dans lequel la solution sursaturée est pulvérisée à une température comprise entre 70°C et 95°C.

6. Procédé selon l'une quelconque des revendications 1 à 5 comprenant en outre une étape d'injection d'air chaud simultanément à l'étape de pulvérisation de la solution sursaturée pour éviter le refroidissement de la solution avant la pulvérisation.

7. Procédé selon la revendication 6 dans lequel l'air chaud est injecté à une température comprise entre 100°C et 150°C.

8. Procédé selon la revendication 5 ou 6 dans lequel la solution sursaturée et ledit air chaud sont injectés au moyen d'une buse à double phase ou d'un atomiseur.

9. Procédé selon l'une quelconque des revendications précédentes dans lequel ladite solution sursaturée représente 1 à 12% et de préférence 2 à 10% du poids total des granulés de poudre.

10. Procédé selon l'une quelconque des revendications précédentes dans lequel les particules de poudre alimentaire comprennent des aromes, en particulier des aromes thermo-volatiles.

11. Procédé selon l'une quelconque des revendications précédentes dans lequel les particules de poudre alimentaire ont une taille de particules moyenne d'environ 500 à 1000 microns et dans lequel la taille de particules moyenne des granulés obtenues varie entre 200 et 3000 microns.

12. Procédé selon l'une quelconque des revendications précédentes dans lequel la poudre est fluidisée mécaniquement ou pneumatiquement.
